# NEUE EUROPÄISCHE PATENTSCHRIFT

(11) **EP 2 653 975 B2**
(45) Veröffentlichungstag und Bekanntmachung des Hinweises auf die Entscheidung über den Einspruch: **22.05.2019**
(45) Hinweis auf die Patenterteilung: 16.12.2015
(21) Anmeldenummer: 13001431.9
(22) Anmeldetag: 20.03.2013
(51) Int. Cl.: G06F 13/40, G01D 21/00

(54) **Sensormodul**
Sensor module
Module de capteur

(30) Priorität: 16.04.2012 DE 102012007417
(43) Veröffentlichungstag der Anmeldung: 23.10.2013
(73) Patentinhaber: FESTO AG & Co. KG, 73734 Esslingen (DE)
(72) Erfinder: Wagner, Dietmar, 71522 Backnang (DE); Luik, Michael, 73760 Ostfildern-Nellingen (DE)
(74) Vertreter: Patentanwälte Magenbauer & Kollegen Partnerschaft mbB

(56) Entgegenhaltungen:
- EP-A2- 1 785 884
- DE-A1-102006 054 421

## Beschreibung

Die Erfindung betrifft ein Sensormodul mit wenigstens einem Sensor zur Erfassung und Umwandlung einer physikalischen Größe in ein elektrisches Sensorsignal.

Derartige Sensormodule werden insbesondere in Fluidsteuerungen zur Erfassung von fluidbezogenen Messwerten wie Druck, Temperatur, Volumenstrom, Strömungsgeschwindigkeit, etc. eingesetzt.

Die DE 102006054421 A1 offenbart eine Vorrichtung mit zumindest einem Sensor zum Erfassen wenigstens einer Prozessgröße und mit zumindest einer modular aufgebauten Messwandlerschaltung, welcher zumindest eine Sensoreinheit, die aus der vom Sensor erfassten Prozessgröße eine Messgröße ermittelt und den Sensor mit der notwendigen Energie versorgt, und zumindest einer anwendungsspezifischen Signalverarbeitungseinheit zur Ermittlung eines Messwerts aus der Messgröße umfasst, wobei zwischen der Sensoreinheit und der Signalverarbeitungseinheit ein konditioniertes Ausgangssignal vorgesehen ist, wobei die Signalverarbeitungseinheit austauschbar ausgestaltet ist und wobei, in Abhängigkeit von einer vorgebbaren Messgenauigkeit, mit der die Vorrichtung den Messwert ermittelt, mehrere unterschiedliche Arten von Signalverarbeitungseinheiten vorgesehen sind.

Aus der DE 102 31 950 A1 ist eine Steuerschaltung zur Konfiguration zumindest eines E/A-Modul-Steckerpins bekannt, wobei die Schaltung zumindest einen Anschluss umfasst, der eine Konfiguration des zumindest einen Pins steuert und wobei der zumindest eine Anschluss einen Pull-down-Anschluss und/oder einen Pull-up-Anschluss und/oder einen Diskret-hoch-Anschluss und/oder einen Diskretniedrig-Anschluss und/oder einen Positive-15-Volt-Anschluss und/oder einen Negative-15-Volt-Anschluss und/oder einen Bereichsanschluss und/oder einen Spannungsausgangsanschluss umfasst.

Damit kann gemäß dem Stand der Technik ein Sensorsignal am E/A-Modul-Steckerpin als Spannungssignal in unterschiedlichen Ausprägungen bereitgestellt werden. Durch diese unterschiedlichen Möglichkeiten zur Bereitstellung eines elektrischen Spannungssignals am Pin kann bereits eine Vielzahl von Anwendungsfällen mit der gleichen Ansteuerungsschaltung für die elektrische Schnittstelle zufriedenstellend beherrscht werden.

Die Aufgabe der Erfindung besteht darin, ein Sensormodul bereitzustellen, mit dem mit geringem Zusatzaufwand eine erhebliche Vergrößerung der Anwendungsbandbreite erreicht werden kann.

Diese Aufgabe wird für ein Sensormodul der eingangs genannten Art mit den Merkmalen des Anspruchs 1 gelöst.

Hierzu umfasst die Signalverarbeitungsvorrichtung vorzugsweise einen entsprechenden Digitalbaustein, der das Sensorsignal in eine Codierung gemäß einem vorgebbaren Kommunikationsprotokoll oder eine andere digitale Codierung wandelt und am Schnittstellenkontakt bereitstellt. Dadurch wird das Einsatzgebiet für das entsprechend ausgerüstete Sensormodul erheblich vergrößert.

Vorteilhafte Weiterbildungen der Erfindung sind in den Unteransprüchen angegeben.

Vorteilhaft ist für das Sensormodul mit den Merkmalen des Anspruchs 1 vorgesehen, dass die Signalverarbeitungseinrichtung für die umschaltbare Bereitstellung des Sensorsignals wahlweise als positives binäres Spannungssignal PNP, als negatives binäres Spannungssignal NPN, als analoges Spannungssignal, als analoges Stromsignal oder als digitales Spannungssignal am Schnittstellenkontakt ausgebildet ist. Hierdurch wird die Vielseitigkeit für die Verwendung des Sensormoduls nochmals erheblich vergrößert und die Anzahl von unterschiedlichen Schaltungsaufbauten für das Sensormodul, die bislang notwendig war, um den Anforderungen nach unterschiedlich aufbereiteten Ausgangssignalen des Sensormoduls gerecht zu werden, kann reduziert, vorzugsweise auf einen einzigen Schaltungsaufbau beschränkt, werden.

Dabei ist vorzugsweise vorgesehen, das Stromsignal an der elektrischen Schnittstelle in proportionaler Beziehung oder in einer anderen vorgebbaren, insbesondere eindeutigen, Beziehung zu einem Signalpegel des Sensors der Sensoreinrichtung bereitzustellen. Durch die Verwendung eines Stromsignals kann auch bei ungünstigen elektrischen Randbedingungen, beispielsweise bei langen elektrischen Leitungsverbindungen zwischen dem Sensormodul und einer nachgeschalteten Verarbeitungseinrichtung, eine zuverlässige Signalübertragung sichergestellt werden. Im Gegensatz zu den analogen oder digitalen Spannungssignalen, bei denen der Signalverarbeitungseinrichtung keine Informationen darüber zur Verfügung stehen, welcher Signalpegel tatsächlich an der nachgeschalteten Verarbeitungseinrichtung ankommt, ist bei einer Bereitstellung des Sensorsignals als Stromsignal bei Einhaltung gewisser elektrischer Mindestanforderungen für die Weiterleitung des Stromsignals an die Verarbeitungseinrichtung eine zuverlässigere Signalübertragung möglich.

Zudem kann mit dieser Maßnahme die Gesamtanzahl der notwendigen Schnittstellenkontakte beschränkt werden, da an einem einzigen Schnittstellenkontakt eine größere Vielzahl von Signalformen, insbesondere alle üblicherweise geforderten Signalformen, für das Sensorsignal bereitgestellt werden können. Zudem kann hierdurch der Aufbau der elektronischen Schaltung im Sensormodul vereinheitlicht werden, da keine unterschiedlichen Schaltungsvarianten bereitgehalten werden müssen, mit denen das Sensormodul ansonsten je nach Kundenwunsch bezüglich der Bereitstellung des Ausgangssignals ausgerüstet werden muss. Typischerweise umfasst die elektrische Schnittstelle des Sensormoduls zwei Versorgungsanschlüsse sowie zwei oder alternativ drei Ausgangsanschlüsse, von denen zumindest ein Ausgangsanschluss von der Signalverarbeitungseinrichtung in der erfindungsgemäßen Weise angesteuert werden kann. Der weitere Ausgangsanschluss kann gemäß einer ersten Alternative in fest vorgegebener Weise als Strom- oder Spannungsausgang konfiguriert sein oder gemäß einer zweiten Alternative ebenfalls von der Signalverarbeitungseinrichtung in der erfindungsgemäßen Weise angesteuert werden.

Vorteilhaft ist es, wenn die Signalverarbeitungseinrichtung für eine zusätzliche, wahlweise Bereitstellung des Sensorsignals als digitales Spannungssignal gemäß dem I/O-Link-Protokoll an der Schnittstelle ausgebildet ist. Hierdurch kann mit einem geringen schaltungstechnischen Aufwand eine zuverlässige Signalübertragung und ein auf unterschiedliche Einsatzbedingungen anpassbare Signalausgabe des Sensormoduls erreicht werden

Erfindungsgemäß umfasst die Signalverarbeitungseinrichtung für die wahlweise Bereitstellung des Sensorsignals in unterschiedlichen Signalformen zueinander parallelgeschaltete, elektrisch ansteuerbare Treiberstufen. Jede der Treiberstufen kann entweder als diskretes elektronisches Bauelement oder als Bestandteil der Signalverarbeitungseinrichtung ausgebildet sein. Die Signalverarbeitungseinrichtung ist vorzugsweise als Mikrocontroller oder Mikroprozessor, insbesondere als spezifisch angepasster Mikrochip (ASIC, application-specific integrated circuit) oder als feldprogrammierbare Logik-Gatter-Anordnung (FPGA, Field Programmable Gate Array) ausgebildet. Jede der Treiberstufen dient dazu, das vom Sensor bereitgestellte Sensorsignal auf Anforderung durch die Signalverarbeitungseinrichtung in der jeweils vorgegebenen Weise, insbesondere als Spannungssignal oder Stromsignal, an die elektrische Schnittstelle bereitzustellen.

In weiterer Ausgestaltung der Erfindung sind dem wenigstens einen Schnittstellenkontakt eine I/O-Link-Treiberstufe sowie eine Parallelschaltung einer binären, negativen Spannungstreiberstufe und einer binären, positiven Spannungstreiberstufe und/oder eine Parallelschaltung einer analogen Spannungstreiberstufe und einer analogen Stromtreiberstufe zugeordnet. Durch diese Parallelschaltung der I/O-Link-Treiberstufe mit den Paarungen einer binären, negativen Spannungstreiberstufe und einer binären, positiven Spannungstreiberstufe und/oder einer analogen Spannungstreiberstufe und einer analogen Stromtreiberstufe kann in vorteilhafter Weise durch bedarfsgemäße Ansteuerung der jeweils benötigten Treiberstufe das entsprechend aufbereitete Sensorsignal an den Schnittstellenkontakt bereitstellen.

Vorteilhaft ist es, wenn Ausgänge der Treiberstufen dauerhaft elektrisch mit dem Schnittstellenkontakt verbunden sind. Somit wird eine Bereitstellung des von der jeweiligen Treiberstufe aufbereiteten Sensorsignals durch alleinige Ansteuerung der jeweiligen Treiberstufe ermöglicht. Auf eine elektronische oder elektrische oder elektromechanische Umschaltung zwischen den verschiedenen Treiberstufen kann vorzugsweise verzichtet werden, wodurch die elektrische Schaltung für die Signalverarbeitungseinrichtung einfach gehalten werden kann.

In weiterer Ausgestaltung der Erfindung ist vorgesehen, dass die Signalverarbeitungseinrichtung ein Kompensationsmodul für die Kompensation von Leckströmen bei Betrieb der Stromtreiberstufe umfasst. Die Leckströme sind beispielsweise durch die parallele Verschaltung der Treiberstufen bedingt und beeinträchtigen die Genauigkeit des Stromsignals, das an die nachgeschaltete Verarbeitungseinrichtung weitergeleitet werden soll. Beispielsweise tritt bei Bereitstellung eines Stromsignals an der elektrischen Schnittstelle der Effekt auf, dass ein Teil des bereitgestellten Stroms in die übrigen Treiberstufen abfließt und somit eine unerwünschte Verfälschung des Stromsignals auftritt. Das Kompensationsmodul dient dazu, diese Verfälschung des Stromsignals zumindest weitgehend zu verhindern, indem ein zusätzlicher Stromfluss bereitgestellt wird, der zumindest nahezu den Leckströmen entspricht. Das Kompensationsmodul kann als diskretes elektronisches Bauteil oder als integraler Bestandteil der Signalverarbeitungseinrichtung ausgebildet sein. Alternativ ist das Kompensationsmodul ein Programmelement eines zum Betrieb der Signalverarbeitungseinrichtung notwendigen Programms. Das Kompensationsmodul kann derart eingerichtet sein, dass ein von der Signalverarbeitungseinrichtung in Abhängigkeit vom Eingangssignal des Sensors ermitteltes und zur Übertragung an die Stromtreiberstufe vorgesehenes Stromsignal um einen vorgebbaren Betrag verändert wird, um die gewünschte Leckstromkompensation zu bewirken. Alternativ kann das Kompensationsmodul als eigenständige Stromquelle ausgebildet sein, die einen zusätzlichen Stromfluss bereitstellt, der den Stromfluss der Stromtreiberstufe zumindest im Wesentlichen um die Leckströme ergänzt.

Zweckmäßig ist es, wenn das Kompensationsmodul für die Bereitstellung eines festen oder eines einstellbaren Kompensationswerts zur Ansteuerung der Stromtreiberstufe ausgebildet ist. Der feste Kompensationswert kann eingesetzt werden, wenn die Anforderungen an die Genauigkeit des Stromsignals an der elektrischen Schnittstelle in einem mittleren Bereich angesiedelt sind oder wenn durch den Aufbau der Signalverarbeitungseinrichtung und der Treiberstufen sichergestellt ist, dass bei einer Vielzahl von Sensormodulen stets im Wesentlichen die gleichen Leckströme auftreten. Der einstellbare Kompensationswert ist dann vorzusehen, wenn hohe Anforderungen an die Genauigkeit des Stromsignals, das an der elektrischen Schnittstelle bereitgestellt wird, erfüllt werden müssen oder wenn die Streuung der Leckströme über eine Vielzahl von Sensormodulen in einem Bereich liegt, der eine sinnvolle Nutzung des Sensorsignals ohne eine individuelle Kalibration der Sensormodule ausschließt. In diesem Fall kann vorgesehen werden, das jeweilige Sensormodul während der Herstellung, insbesondere am Ende des Herstellungsvorgangs, in einer Testeinrichtung unter vorgebbaren Bedingungen zu prüfen und eine Abweichung zwischen einem Betrag eines physikalischen Werts, der vom Sensor gemessen werden soll und einem an der elektrischen Schnittstelle anliegenden Stromsignal festzustellen. In einem nachfolgenden Kalibrierungsschritt kann dann wahlweise durch Einstellung eines Parameters des als Programmelement innerhalb eines Programms zum Betrieb der Signalverarbeitungseinrichtung ausgebildeten Kompensationsmoduls oder durch Justierung oder Trimmung einer elektrischen oder elektronischen Komponente des als Schaltungsbestandteil ausgebildeten Kompensationsmoduls die erforderliche Korrektur für das Stromsignal vorgenommen werden.

Bei einer vorteilhaften Weiterbildung der Erfindung ist vorgesehen, dass eine Eingabeeinrichtung zur Auswahl einer Betriebsart für die Signalverarbeitungseinrichtung und/oder eine Informationsausgabeeinrichtung zur Anzeige einer ausgewählten Betriebsart der Signalverarbeitungseinrichtung mit der Signalverarbeitungseinrichtung gekoppelt sind. Mit der Eingabeeinrichtung kann von einem Benutzer beispielsweise eine Auswahl getroffen werden, in welcher Weise das Sensorsignal an der elektrischen Schnittstelle bereitgestellt wird. Die Anzeigeeinrichtung, bei der es sich um ein Leuchtmittel oder um eine Segmentanzeige oder um ein frei programmierbares Display handeln kann, dient dazu, dem Benutzer die getroffene Auswahl und/oder andere Informationen zum Sensormodul anzuzeigen.

Vorzugsweise ist die elektrischen Schnittstelle als Anordnung von Steckkontakten, vorzugsweise als Steckbuchse, insbesondere als M8-Steckbuchse oder als M12-Steckbuchse, ausgebildet.

Eine vorteilhafte Ausführungsform der Erfindung ist in der Zeichnung dargestellt. Dabei zeigt:

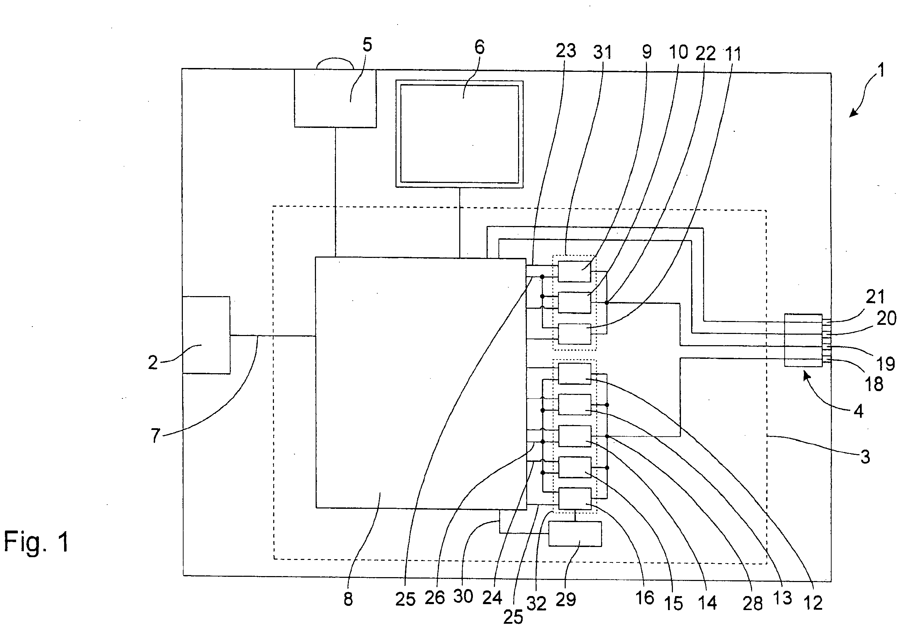

- Figur 1: ein schematisches Blockschaltbild für ein Sensormodul mit einem Sensor, einer Signalverarbeitungseinrichtung, einer elektrischen Schnittstelle, einer Eingabeeinrichtung und einer Ausgabeeinrichtung.

Ein in der Figur schematisch in Form eines Blockschaltbilds dargestelltes Ausführungsbeispiel für ein Sensormodul 1 umfasst als wesentliche Komponenten einen Sensor 2, eine Signalverarbeitungseinrichtung 3, eine elektrische Schnittstelle 4, eine Eingabeeinrichtung 5 und eine Informationsausgabeeinrichtung 6.

Das Sensormodul 1 ist zur Ermittlung des Betrags einer physikalischen Größe wie Druck, Temperatur, Volumenstrom, Strömungsgeschwindigkeit, etc. vorgesehen. Dabei ist der Sensor 2 derart ausgebildet, dass er die physikalische Größe erfasst und ein vom Betrag der erfassten physikalischen Größe abhängiges elektrisches Sensorsignal über eine Sensorleitung 7 an die Signalverarbeitungseinrichtung 3 ausgibt. Die Signalverarbeitungseinrichtung 3 umfasst exemplarisch einen Mikrocontroller 8 sowie mehrere dem Mikrocontroller 8 nachgeschaltete Treiberstufen 9 bis 11 und 13 bis 16. Die Treiberstufen 9, 10 und 11 sind elektrisch parallel zueinander geschaltet und bilden eine erste Ausgangsstufe 31. Die Treiberstufen 13 bis 16 sind ebenfalls parallel zueinander geschaltet und bilden eine zweite Ausgangsstufe 32. Jede der Treiberstufen 9 bis 11 und 13 bis 16 ist mittels einer Signalleitung 25 bzw. 26 elektrisch mit dem Mikrocontroller 8 verbunden und empfängt das vom Mikrocontroller 8 aufbereitete Sensorsignal.

Die beiden Ausgangsstufen 31 und 32 sind jeweils mit einem als Schnittstellenkontakt 18 bzw. 19 ausgebildeten Ausgangsanschluss der elektrischen Schnittstelle 4 verbunden und stellen dort jeweils das Sensorsignal in vorgebbarer Weise bereit. Ferner weist die elektrische Schnittstelle 4 exemplarisch zwei als Versorgungsanschlüsse dienende Schnittstellenkontakte 20, 21 auf, an die eine Versorgungsspannung für das Sensormodul 1 bereitgestellt werden kann.

Die Treiberstufe 9 ist exemplarisch als I/O-Link-Treiberstufe ausgebildet und kann an einem gemeinsamen Knotenpunkt 22, der elektrisch mit dem Schnittstellenkontakt 18 verbunden ist, ein Spannungssignal zur Verfügung stellen, in dem das Sensorsignal gemäß dem I/O-Link Protokoll codiert ist.

Die Treiberstufe 10 ist exemplarisch als positive Spannungstreiberstufe ausgebildet und kann ein positives binäres Spannungssignal PNP an den Knotenpunkt 22 zur Verfügung stellen. Die Treiberstufe 11 ist exemplarisch als negative Spannungstreiberstufe ausgebildet und kann ein negatives binäres Spannungssignal NPN an den Knotenpunkt 22 zur Verfügung stellen.

Die Treiberstufe 12 ist exemplarisch als analoge Spannungsreiberstufe ausgebildet und kann ein dem Sensorsignal entsprechendes analoges Spannungssignal an den Knotenpunkt 28 zur Verfügung stellen.

Die Treiberstufe 13 ist exemplarisch als positive Spannungstreiberstufe ausgebildet und kann ein positives binäres Spannungssignal PNP an den Knotenpunkt 28 zur Verfügung stellen. Die Treiberstufe 14 ist exemplarisch als negative Spannungstreiberstufe ausgebildet und kann ein negatives binäres Spannungssignal NPN an den Knotenpunkt 28 zur Verfügung stellen.

Exemplarisch sind die Treiberstufe 15 als I/O-Link-Treiberstufe und die Treiberstufe 16 als Stromtreiberstufe ausgebildet.

Jeder der Treiberstufen 9 bis 11 und 13 bis 16 ist jeweils eine Aktivierungsleitung 23 bzw.24 zugeordnet, die eine Bereitstellung eines Aktivierungssignals durch den Mikrocontroller 8 an die jeweils zu aktivierende Treiberstufe 9 bis 11 und 13 bis 16 ermöglicht. Vorzugsweise sind die Treiberstufen 9 bis 11 und 13 bis 16 derart eingerichtet, dass sie permanent mit dem vom Mikrocontroller 8 verarbeiteten Sensorsignal beaufschlagt werden, aber nur dann ein Ausgangssignal an den Kotenpunkt 22 der ersten Ausgangsstufe 31 bzw. an den Knotenpunkt 28 der zweiten Ausgangsstufe 32 bereitstellen, wenn auf der jeweils zugeordneten Aktivierungsleitung 23 bzw. 24 ein vom Mikrocontroller 8 bereitzustellendes Aktivierungssignal anliegt.

Der Stromtreiberstufe 16 ist exemplarisch ein Kompensationsmodul 29 zugeordnet, das beispielhaft für eine zusätzliche Bereitstellung eines Stromflusses ausgebildet ist, der von der Stromtreiberstufe 16 an den Knotenpunkt 28 ausgegeben werden kann. Beim vorliegenden Ausführungsbeispiel ist das Kompensationsmodul 29 als diskretes Bauelement ausgebildet, das vorzugsweise auf einer gemeinsamen gedruckten Schaltung mit dem Mikrocontroller 8 und den Treiberstufen 9 bis 16 angeordnet ist. Das Kompensationsmodul 29 wird vom Mikrocontroller 8 über eine Steuerleitung 30 angesteuert, wobei die Ansteuerung vorzugsweise derart ausgebildet ist, dass der vom Kompensationsmodul 29 zusätzlich bereitgestellte Stromfluss in Abhängigkeit zu einem vorgebbaren Parameter oder Parameterfeld steht, der bzw. das im Mikrocontroller 8 abgelegt ist. Vorzugsweise werden der Parameter oder das Parameterfeld bei der Herstellung des Sensormoduls 1 in einem Kalibrierungsschritt bestimmt und im Mikrocontroller 8 gespeichert.

Bei einer nicht dargestellten Ausführungsform ist das Kompensationsmodul als Programmelement innerhalb eines Programms zum Betrieb der Signalverarbeitungseinrichtung ausgebildet und kann insbesondere über die Aktivierungsleitung an die Stromtreiberstufe übertragen werden, um dort eine Korrektur des am Eingang der Stromtreiberstufe anliegenden, vom Mikrocontroller verarbeiteten Sensorsignals zu bewirken und somit eine zumindest teilweise Kompensation der Leckströme in der Signalverarbeitungseinrichtung 3 zu ermöglichen.

## Patentansprüche

1. Sensormodul mit wenigstens einem Sensor (2) zur Erfassung und Umwandlung einer physikalischen Größe in ein elektrisches Sensorsignal, mit einer elektrischen Schnittstelle (4), die zur Bereitstellung des Sensorsignals an eine Verarbeitungseinrichtung ausgebildet ist, wobei der elektrischen Schnittstelle (4) eine Signalverarbeitungseinrichtung (3) zugeordnet ist, die zur umschaltbaren Bereitstellung des Sensorsignals an einem Schnittstellenkontakt (18, 19) der Schnittstelle (4) wahlweise als analoges Spannungssignal oder als analoges Stromsignal ausgebildet ist, wobei die Signalverarbeitungseinrichtung (3) für eine zusätzliche Bereitstellung des Sensorsignals am Schnittstellenkontakt (18, 19) in Form eines digitalen Spannungssignals ausgebildet ist, wobei die Signalverarbeitungseinrichtung (3) für die wahlweise Bereitstellung des Sensorsignals in unterschiedlichen Signalformen zueinander parallelgeschaltete, elektrisch ansteuerbare Treiberstufen (9 bis 16) umfasst, wobei dem Schnittstellenkontakt (18) eine I/O-Link-Treiberstufe (15) sowie eine Parallelschaltung einer analogen Spannungstreiberstufe (12) und einer analogen Stromtreiberstufe (16) zugeordnet sind und wobei Ausgänge der Treiberstufen (9 bis 16) dauerhaft elektrisch mit dem Schnittstellenkontakt (18, 19) verbunden sind.

2. Sensormodul nach Anspruch 1, **dadurch gekennzeichnet, dass** die Signalverarbeitungseinrichtung (3) für die umschaltbare Bereitstellung des Sensorsignals wahlweise als positives binäres Spannungssignal PNP, als negatives binäres Spannungssignal NPN, als analoges Spannungssignal, als analoges Stromsignal oder als digitales Spannungssignal am Schnittstellenkontakt (18) ausgebildet ist.

3. Sensormodul nach Anspruch 1 oder 2, **dadurch gekennzeichnet, dass** die Signalverarbeitungseinrichtung (3) für eine Bereitstellung des Sensorsignals als digitales Spannungssignal gemäß dem I/O-Link-Protokoll an der Schnittstelle (4) ausgebildet ist.

4. Sensormodul nach Anspruch 1, **dadurch gekennzeichnet, dass** dem Schnittstellenkontakt (18) eine Parallelschaltung einer binären, negativen Spannungstreiberstufe (14) und einer binären, positiven Spannungstreiberstufe (13) zugeordnet sind.

5. Sensormodul nach Anspruch 1 oder 4, **dadurch gekennzeichnet, dass** die Signalverarbeitungseinrichtung (3) ein Kompensationsmodul (29) für die Kompensation von Leckströmen bei Betrieb der Stromtreiberstufe (16) umfasst.

6. Sensormodul nach Anspruch 7, **dadurch gekennzeichnet, dass** das Kompensationsmodul (29) für die Bereitstellung eines festen oder eines einstellbaren Kompensationswerts zur Ansteuerung der Stromtreiberstufe (16) ausgebildet ist.

7. Sensormodul nach einem der vorhergehenden Ansprüche, **dadurch gekennzeichnet, dass** eine Eingabeeinrichtung (5) zur Auswahl einer Betriebsart für die Signalverarbeitungseinrichtung (3) und/oder eine Informationsausgabeeinrichtung (6) zur Anzeige einer ausgewählten Betriebsart der Signalverarbeitungseinrichtung (3) mit der Signalverarbeitungseinrichtung (3) gekoppelt sind.

8. Sensormodul nach einem der vorhergehenden Ansprüche, **dadurch gekennzeichnet, dass** die elektrischen Schnittstelle (4) als Anordnung von Steckkontakten, vorzugsweise als Steckbuchse, insbesondere als M8-Steckbuchse oder als M12-Steckbuchse, ausgebildet ist.

## Claims

1. Sensor module with at least one sensor (2) for the detection and conversion of a physical variable into an electrical sensor signal, with an electrical interface (4) which is designed to provide the sensor signal to a processing device, wherein the electrical interface (4) is assigned a signal processing device (3), which is designed for the switchable provision of the sensor signal to an interface contact (18, 19) of the interface (4), either as a positive binary voltage signal PNP or as a negative binary voltage signal NPN and/or is designed for the switchable provision of the sensor signal to an interface contact (18, 19) of the interface (4), either as an analog voltage signal or as an analog current signal, wherein the signal processing device (3) is designed for an additional provision of the sensor signal to the respective interface contact (18, 19) in the form of a digital voltage signal, wherein the signal processing device (3) includes parallel-connected, electrically controllable driver stages (9 to 16) for the optional provision of the sensor signal in different signal forms, wherein the interface contact (18) are assigned an I/O link driver stage (15) and a parallel connection of an analog voltage driver stage (12) and an analog current driver stage (16) and wherein outputs of the driver stages (9 to 16) are permanently electrically connected to the interface contact (18, 19).

2. Sensor module according to claim 1, **characterised in that** the signal processing device (3) is designed for the switchable provision of the sensor signal either as positive binary voltage signal PNP, as negative binary voltage signal NPN, as analog voltage signal, as analog current signal or as digital voltage signal at the interface contact (18).

3. Sensor module according to claim 1 or 2, **characterised in that** the signal processing device (3) is designed for provision of the sensor signal as a digital voltage signal in accordance with the I/O link protocol at the interface (4).

4. Sensor module according to claim 1, **characterised in that** the interface contact (18) is assigned a parallel connection of a binary negative voltage driver stage (14) and a binary positive voltage driver stage (13).

5. Sensor module according to claim 1 or 4, **characterised in that** the signal processing device (3) includes a compensation module (29) to provide compensation for leakage currents in operation of the current driver stage (16).

6. Sensor module according to claim 7, **characterised in that** the compensation module (29) is designed to provide a fixed or a variable compensation value for control of the current driver stage (16).

7. Sensor module according to any of the preceding claims, **characterised in that** an input device (5) for selecting an operating mode for the signal processing device (3) and/or an information output device (6) for displaying a selected operating mode of the signal processing device (3) are connected to the signal processing device (3).

8. Sensor module according to any of the preceding claims, **characterised in that** the electrical interface (4) is in the form of an arrangement of plug-in contacts, preferably sockets, in particular M8 sockets or M12 sockets.

## Revendications

1. Module de capteur comprenant au moins un capteur (2) servant à détecter et à convertir une grandeur physique en un signal de capteur électrique, comprenant une interface (4) électrique, qui est réalisée afin de fournir le signal de capteur à un dispositif de traitement, sachant qu'est associé à l'interface (4) électrique un dispositif de traitement de signal (3), qui est réalisé afin de fournir de manière commutable le signal de capteur à un contact d'interface (18, 19) de l'interface (4) au choix sous la forme d'un signal de tension binaire positif (PNP) ou sous la forme d'un signal de tension binaire négatif (NPN) et/ou qui est réalisé afin de fournir de manière commutable le signal de capteur à un contact d'interface (18, 19) de l'interface (4) au choix sous la forme d'un signal de tension analogique ou sous la forme d'un signal de courant analogique, cependant le dispositif de traitement de signal (3) est réalisé en vue de fournir en supplément le signal de capteur au niveau du contact d'interface (18, 19) respectif sous la forme d'un signal de tension numérique, cependant le dispositif de traitement de signal (3) comprend, en vue de fournir au choix le signal de capteur sous différentes formes de signal, des étages d'attaque (9 à 16) montés en parallèle les uns par rapport aux autres, cependant le contact d'interface (18) comprend un étage d'attaque IO-Link (15) et un branchement parallèle d'un étage d'attaque de tension analogique (12) et d'un étage d'attaque de courant analogique (16) et cependant des sorties des étages d'attaque (9 à 16) sont reliées durablement de manière électrique au contact d'interface (18, 19).

2. Module de capteur selon la revendication 1, **caractérisé en ce que** le dispositif de traitement de signal (3) est réalisé en vue de fournir de manière commutable le signal de capteur au choix sous la forme d'un signal de tension positif binaire (PNP), sous la forme d'un signal de tension binaire négatif (NPN), sous la forme d'un signal de tension analogique, sous la forme d'un signal de courant analogique ou sous la forme d'un signal de tension numérique au niveau du contact d'interface (18).

3. Module de capteur selon la revendication 1 ou 2, **caractérisé en ce que** le dispositif de traitement de signal (3) est réalisé en vue de fournir le signal de capteur sous la forme d'un signal de tension numérique à l'interface (4) conformément au protocole IO-Link.

4. Module de capteur selon la revendication 1, **caractérisé en ce que** sont associés au contact d'interface (18) un branchement parallèle d'un étage d'attaque de tension négatif binaire (14) et d'un étage d'attaque de tension positif binaire (13)

5. Module de capteur selon la revendication 1 ou 4, **caractérisé en ce que** le dispositif de traitement de signal (3) comprend un module de compensation (29) en vue de la compensation de courants de fuite lors du fonctionnement de l'étage d'attaque de courant (16).

6. Module de capteur selon la revendication 7, **caractérisé en ce que** le module de compensation (29) est réalisé en vue de fournir une valeur de compensation fixe ou une valeur de compensation réglable servant à commander l'étage d'attaque de courant (16).

7. Module de capteur selon l'une quelconque des revendications précédentes, **caractérisé en ce qu'**un dispositif d'entrée (5) servant à sélectionner un mode de fonctionnement pour le dispositif de traitement de signal (3) et/ou un dispositif d'édition d'information (6) servant à afficher un mode de fonctionnement sélectionné du dispositif de traitement de signal (3) sont couplés au dispositif de traitement de signal (3).

8. Module de capteur selon l'une quelconque des revendications précédentes, **caractérisé en ce que** l'interface (4) électrique est réalisée sous la forme d'un ensemble de contacts enfichables, de préférence sous la forme d'une fiche femelle, en particulier sous la forme d'une fiche femelle M8 ou sous la forme d'une fiche femelle M12.
